# EUROPEAN PATENT SPECIFICATION

(11) **EP 0 756 713 B1**
(45) Date of publication and mention of the grant of the patent: **20.10.1999**
(21) Application number: 94925582.2
(22) Date of filing: 08.09.1994
(51) Int. Cl.: G02B 6/00, G02B 6/44

(54) **SPLICE TRAY**
VERTEILERGESTELL
PLATINE DE RACCORDEMENT

(30) Priority: 10.09.1993 EP 93307148
(43) Date of publication of application: 05.02.1997
(73) Proprietor: BRITISH TELECOMMUNICATIONS public limited company, London EC1A 7AJ (GB)
(72) Inventor: FROST, Peter, Lewis, John 14 Copswood Close, Suffolk IP5 7QF (GB); KERRY, John, Ipswich Suffolk IP5 7UZ (GB); JESSOP, Paul, Essex CO15 3PW (GB); BENTON, Simon, Charles, Tristan Min.Des.& Devel., Framligham Woodbridge, Suffolk IP13 9EE (GB)
(74) Representative: Osborne, David Ernest
(86) International application number: GB9401957
(87) International publication number: WO9507476

(56) References cited:
- EP-A- 0 159 857
- EP-A- 0 341 027
- EP-A- 0 490 644
- WO-A-90/05930
- WO-A-91/08574
- DE-A- 4 030 310
- US-A- 4 708 430

## Description

This invention relates to an optical fibre management system, and in particular to a splice tray for an optical fibre splitter array sub-assembly for incorporation in the node of an optical fibre telecommunications network.

In the United Kingdom, the telecommunications network includes a trunk network which is substantially completely constituted by optical fibre, and a local access network which is substantially completely constituted by copper pairs. Flexibility in the copper access network is provided at two points en route to the customer; firstly, at street-side cabinets serving up to 600 lines; and secondly, at distribution points serving around 10-15 lines. In total, the network has about 250,000km of underground ducts, 83,000 cabinets, 3.1 million distribution points and 3.7 million manholes and joint boxes. Eventually, it is expected that the entire network, including the access network, will be constituted by fibre.

The ultimate goal is a fixed, resilient, transparent telecommunications infrastructure for the optical access network, with capacity for all foreseeable service requirements. One way of achieving this would be to create a fully-managed fibre network in the form of a thin, widespread overlay for the whole access topography as this would exploit the existing valuable access network infrastructure. Such a network could be equipped as needs arise, and thereby could result in capital expenditure savings, since the major part of the investment will be the provision of terminal equipment on a 'just in time' basis. It should also enable the rapid provision of extra lines to new or existing customers, and flexible provision or reconfiguration of telephony services.

In order to be completely future proof, the network should be single mode optical fibre, with no bandwidth limiting active electronics within the infrastructure. Consequently, only passive optical networks (PONs) which can offer this total transparency and complete freedom for upgrade, should be considered.

The most common passive optical network is the simplex single star, with point-to-point fibre for each transmit and receive path, from the exchange head end (HE) to the customer network terminating equipment (NTE). This network design has been used throughout the world and meets all the access criteria. It involves high fibre count cables, and unique electro-optic provision at HE and NTE for each customer. The resulting inherent cost can only be justified for large business users, who generally also require the security of diverse routing, which increases the cost still further.

The advent of optical splitters and wavelength-flattened devices has enabled the concept of the PON to be taken one step further. These passive components allow the power transmitted from a single transmitter to be distributed amongst several customers, thereby reducing and sharing the capital investment. In 1987, BT demonstrated splitter technology in a system for telephony on a passive optical network (TPON), with a 128 way split and using time division multiplex (TDM) running at 20Mb/s. This combination enabled basic rate integrated service digital network (ISDN) to be provided to all customers. In practice, the competitive cost constraint of the existing copper network precludes domestic customers from having just telephony over fibre, due to the high capital cost of equipment. This may change in the future. In the meantime, telephony for small business users (for example those having more than 5 lines) can probably break this barrier.

The wider range of services and higher capacity required by business customers makes a 32-way split more attractive for a 20 Mb/s system and this has been demonstrated by BT's local loop optical field trial (LLOFT) at Bishop's Stortford.

In summary, the use of splitter based PON architecture will reduce the cost of fibre deployment in the access network. When compared with point-to-point fibre, savings will result from:
(i) reducing the number of fibres at the exchange and in the network;
(ii) reducing the amount of terminal equipment at the exchange;
(iii) sharing the cost of equipment amongst a number of customers;
(iv) providing a thin, widespread, low cost, fibre infrastructure; and
(v) providing a high degree of flexibility, and allowing 'just in-time' equipment and service provision.

Additionally, PON architecture can be tailored to suit the existing infrastructure resources (duct and other civil works).

Total network transparency will retain the option for future services to be provided on different wavelengths to the telecommunications, which for TPON is in the 1300nm window. By transmitting at other wavelengths, other services, such as broadband access for cable television and high definition television, or business services, such as high bit rate data, video telephony or video conferencing, can be provided. The huge bandwidth potential of fibre promises virtually unlimited capacity for the transparent network. Eventually, it will be possible to transmit hundreds of wavelengths simultaneously, as the development of technology in optical components, such as narrow band lasers, wavelength division multiplexers (WDMs), optical filters, fibre amplifiers and tunable devices, moves forward.

For this potential to remain available, and for the access network to be used to provide many and varied services, then it must be designed and engineered to provide very high levels of security and resilience. Even for simple POTS, advance warning and live maintenance are essential to limit disruption.

Resilience implies separacy of routing, and exploiting the existing infrastructure of underground ducts and other civil works is a prime requirement of the design philosophy. Analysis of this resource has indicated that separacy, from creating primar ring topographies, could be achieved by linking the spine cables which currently feed many primary connection points (PCPs) in the existing star type network.

In order to create rings from the existing star configurations, some localities will have existing ducts that will allow the link cables to be installed. In BT's suburban networks, analysis has shown that on average 60% of PCPs can be served on rings using existing ducts; and, by adding new ducts links of 200m or less, a further 30% can be covered. In some cases, there will be natural or man made boundaries where physical rings cannot be provided, and in these cases duplicate fibres in the same duct route, i.e. across rivers or over railway bridges, may be the only choice.

The architecture adopted for the PON topography will be influenced by transmission techniques, and the availability of suitable splitter components. Transmission options are simplex (two fibre paths), duplex, half duplex or diplex (single fibre path).

Simplex working increases the complexity of the infrastructure due to the two fibres per circuit required. However, it benefits from the lowest optical insertion loss, due to the absence of duplexing couplers; and the lowest return loss, since such systems are insensitive to reflections of less than 25 dBm with separate transmit and receive paths. Duplex and half duplex working each have an insertion loss penalty of 7dB from the duplexing couplers, and diplex working replaces these with WDMs, with a reduced penalty of 2dB.

In view of the long term aim to provide a total fibre infrastructure, and the present early state of passive technology components, it is considered beneficial to opt for simplex working and a relatively low level of split (£32) for PON networks.

Splitter based PON architectures incorporate splice trays for storing fibre splices. Known splice trays are described in EP-A-490644 and EP-A-215688.

The present invention provides a splice tray for housing at least one optical fibre splice and for storing optical fibres leading to the or each splice as defined in claim 1.

Preferably, the main body portion comprises an additional storage region to store dark fibre, the additional storage region being distinct from that provided to store live fibre. The dark fibre storage region may be the interior of a mandrel, the dimensions of the interior of the mandrel being such that dark fibre can be stored in a looped fashion therein at not less than the minimum bend radius curvature for live fibre. The fibre entry/exit portion may be provided with two fibre entry/exit ports and first and second guide channels are provided to guide respective fibres to the main body portion from the ports. The fibre entry/exit portion may be provided with a third fibre entry/exit port and a third fibre guide channel is provided to guide a respective fibre to the main body portion from the third port. The track(s) may be recessed into the main body portion. The main body portion may be provided with fibre retention tabs overlying the live fibre storage region. The splice tray may be provided with a hinged mounting arm one end of which is fixed to the main body portion of the tray, and the other end of which carries a retaining ring the hinge being disposed between the two ends. The mounting arm of the splice tray may be such that the two parts of the arm on opposite sides of the hinge lie in close proximity to one another in a folded-back position against the main body portion of the tray when the tray is in a first position relative to the retaining ring, said two arm portions being in a generally straight line configuration when the tray is in a second position relative to the retaining ring.

The invention will now be described in greater detail, by way of example, with reference to the accompanying drawings, in which: -
Figure 1 is a perspective view, for one side, of an optical fibre telecommunications network node incorporating three splitter array sub-assemblies each of which is constructed in accordance with the invention;
Figure 2 is a perspective view, form the opposite side, of the node of Figure 1;
Figure 3 is a perspective view showing the node of Figures 1 and 2 mounted in a footway box in a storage position;
Figure 4 is a perspective view similar to that of Figure 3, but showing the node 2 mounted in the footway box in its working position;
Figure 5 is an exploded perspective view of one of the splitter array sub-assemblies of the node of Figures 1 and 2;
Figure 6 is a perspective similar to that of Figure 5, but showing parts of the sub-assembly, then parts being in their operative positions;
Figure 7 is a perspective view of one of the splice trays of the splitter array sub-assembly of Figures 5 and 6;
Figure 8 is a plan view showing the fibre entry/exit portion of the splice tray of Figure 7.
Figure 9 is a perspective view of one of the bend-limiting tube manifolds of the splitter array sub-assembly of Figures 5 and 6;
Figure 10 is a perspective view of one of the coupler array mats of the splitter array sub-assembly of Figures 5 and 6;
Figure 11 is a perspective view of the coupler array back cover of the splitter array sub-assembly;
Figure 12 is a plan view of the break-out tray which forms part of the node of Figures 1 and 2;
Figure 13 is an enlarged perspective view of part of the break-out tray; and
Figure 14 is a perspective view of another form of splice tray which can be incorporated into a splitter array sub-assembly.

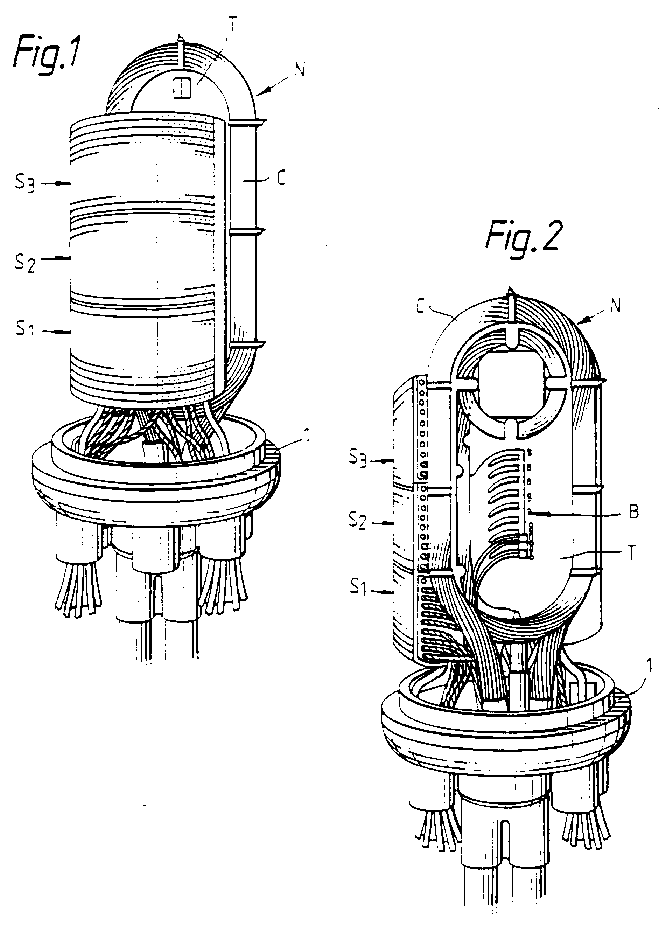

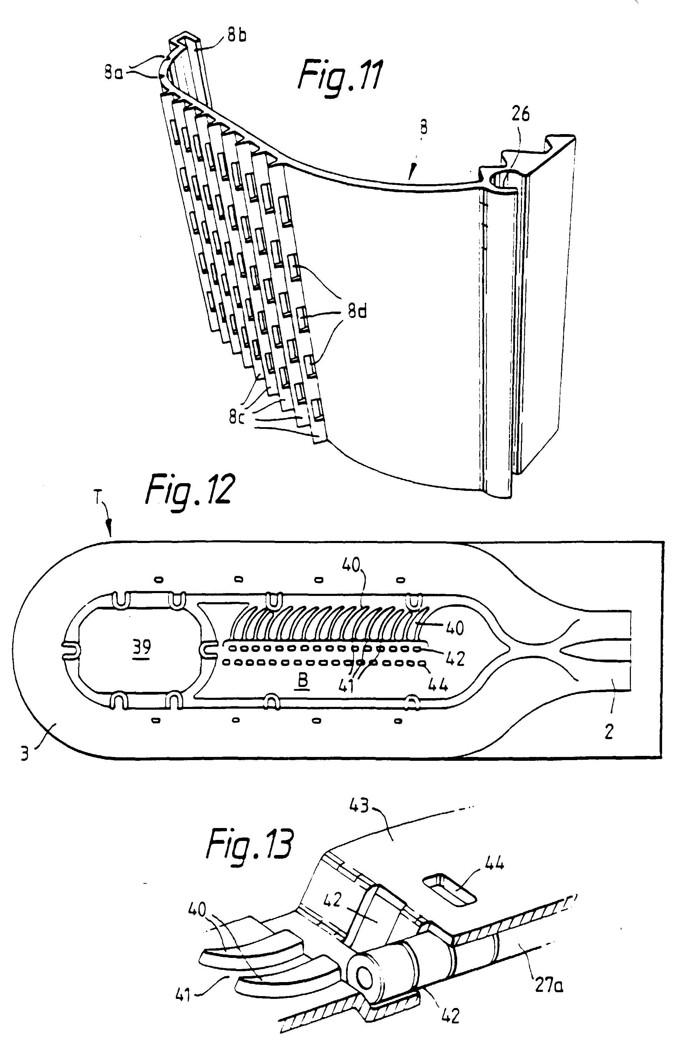

Referring to the drawings, Figures 1 and 2 show a node N forming part of a ring topography PON. The node N includes a stack of three splitter array sub-assemblies S₁, S₂ and S₃ and a break-out tray T. A 96 fibre cable C, which forms a ring (loop) centred on a local exchange (not shown), enters the break-out tray T via a cable entry portion 2 (see Figure 12) after passing through a node base 1. The cable (then passes at least twice round a generally oval perimeter track 3 of the tray T, and leaves the tray via the portion 2. The 96 fibres are housed in twelve flexible tubes (not shown) made of plastics material, each of the tubes containing eight primary-coated fibres. As is described in detail below with reference to Figure 12, the tray T includes a break-out region B in which individual fibre end portions, formed by cutting into one of the tubes, are led to the splitter array sub-assemblies S₁, S₂ and S₃. In this connection, it should be noted that the tray T stores a sufficient length of the cable C so that, after cutting one of the tubes in the middle of this stored length, and stripping back that tube to expose its optical fibres, each of the originally continuous fibres forms two fibre end portions whose length is sufficient to be led to the splitter array sub-assemblies S₁, S₂ and S₃, and to leave spare fibre which can be stored for future use.

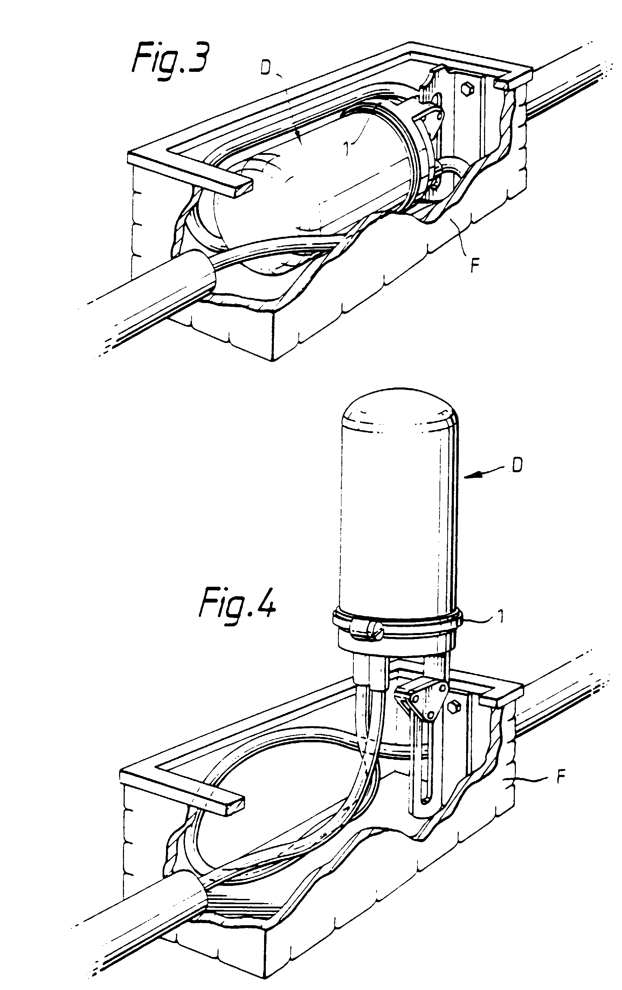

Figures 3 and 4 show the mounting of the node N in a footway box F, a dome-shaped cover D being fixed to the node base 1 prior to mounting.

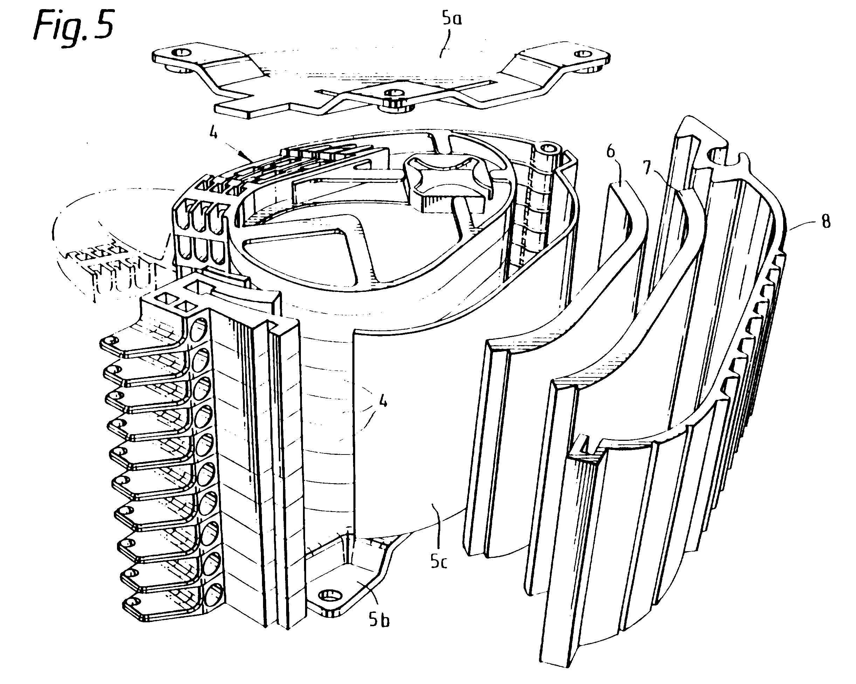

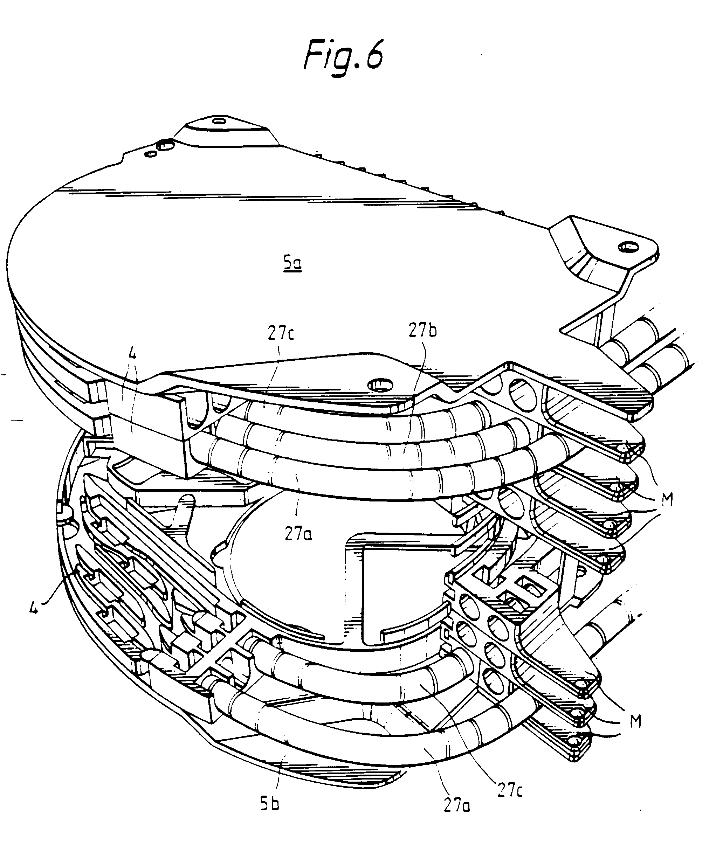

One of the splitter array sub-assemblies, S₁, is shown in detail in Figures 5 and 6. The other two sub-assemblies S₂ and S₃ are the same as the sub-assembly S₁. The sub-assembly S₁ includes a stack of ten splice trays 4, each of which is 8mm thick. The trays 4 are supported (in a manner described below) by a stainless steel chassis 5 constituted by a top plate 5a, a base plate 5b and a back plate 5c. Each of the splice trays 4 is a single circuit splice tray, that is to say, in use, it has two incoming optical fibres (one each for transmitting and receiving), and two outgoing optical fibres (one each for transmitting and receiving). The three plates 5a, 5b and 5c are welded together, and the top plate 5a of the sub-assembly S₁ can be fixed to the base plate 5b of the adjacent sub-assembly S₂ (not shown in Figures 5 and 6) by means of mounting bolts (not shown). Similar mounting bolts can be used to fix the plate 5a of the sub-assembly S₁ and the plate 5b of the sub-assembly S₃ to support means (not shown) in the node N.

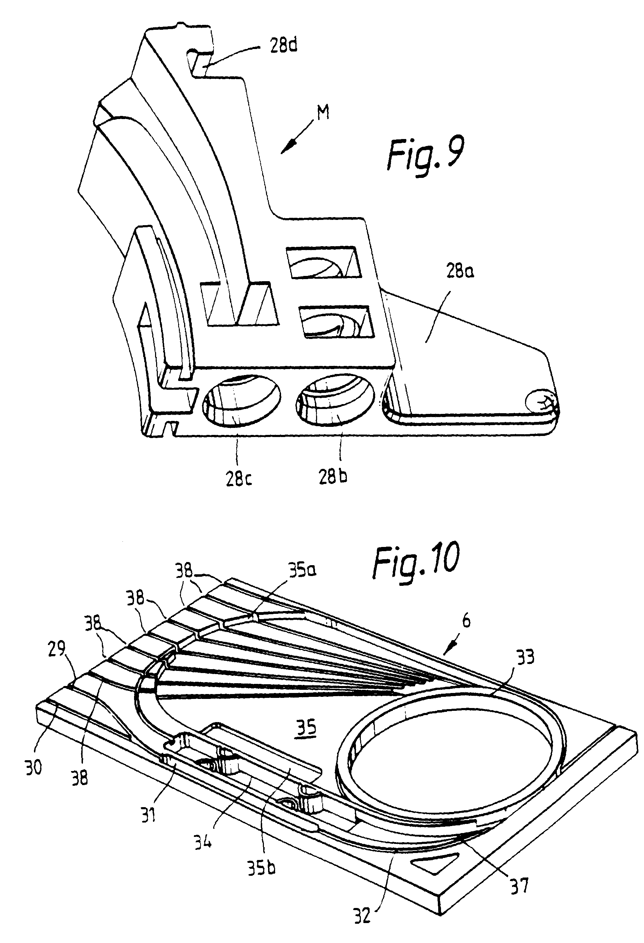

The chassis 5 also supports an input splitter array mat 6, an output splitter array mat 7, and a splitter array back cover 8. In this connection, the input mat 6 carries (as is described below with reference to Figure 10) fibres which carry telecommunications signals from the exchange to customers. These fibres are termed transmit fibres. Similarly, the output mat 7 carries fibres which carry telecommunications signals from customers to the exchange. These fibres are termed receive fibres. The mats 6 and 7 are made of a flexible polymer, for example an elastomeric polymer such as injection mouldable zantoprene, or polyurethane. The back cover 3 is made of flexible polypropylene (which is also injection mouldable). This inherent flexibility ensures that, in use, the mats 6 and 7 are held firmly against the chassis back plate 5c by the back cover 8.

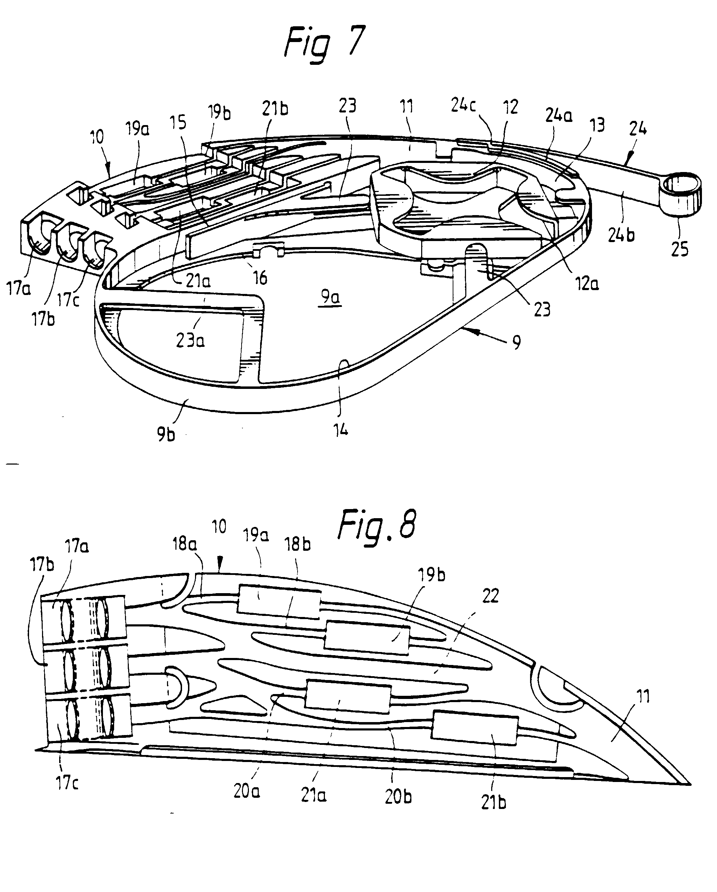

As shown in Figure 7, each splice tray 4 has a main body portion 9 and a fibre entry portion 10 which also constitutes a clip-on test area. Fibre access to the main body portion 9 from the fibre entry portion 10 is via a channel 11. The main body portion 9 is of oval configuration, having an oval base 9a and an upstanding peripheral wall 9b. A hollow mandrel 12 is provided on the base 9a adjacent to the entry channel 11. The mandrel 12 is of rounded square cross-section, is sized to ensure minimum bend requirements for live fibre passing around it, and has a fibre inlet aperture 12a through which dark fibre can pass for internal storage. A channel 13 is defined between the mandrel 12 and the peripheral wall 9b, the channel 13 leading to a further channel 14 which leads around the inside of the wall to a splice holder region 15. In use, this region 15 houses a splice holder (not shown) for splicing two incoming fibres to two outgoing fibres. A direction reversing channel 16 leads from the channel 14 adjacent to the region 15 back to that portion of the channel 14 which adjoins the channel 13 adjacent to the mandrel 12.

The fibre entry portion 10 of each splice tray 4 includes three fibre entry/exit ports 17a, 17b and 17c (see Figure 8). Diverging channels 18a and 18b are provided to lead fibre between the port 17a and the channel 11 via respective apertures 19a and 19b. These apertures 19a and 19b constitute what are known as "clip-on apertures", and provide easy access to the associated fibres in order to measure the light passing there along, and hence to determine the quality of the splices. These clip-on apertures, and associated light measurement apparatus, are described in the specification of our International patent application WO 93/00600.

Similar diverging channels 20a and 20b are provided to lead fibre between the port 17c and the channel 11 via respective clip-on apertures 21a and 21b. A single channel 22 is provided for leading fibre between the port 17b and the channel 11. The channel 22 is not provided with a clip-on aperture.

Each splice tray 4 is also provided with a number of fibre retention tabs 23 for holding fibre in the various channels 11, 13, 14, 16, 18a, 18b, 20a, 20b and 22. One of these tabs (indicated by the reference numeral 23a) is generally V-shaped, and extends from the curved end of the peripheral wall 9b remote from the mandrel 12 about halfway across, and above, that portion of the base 9a between that wall portion and the mandrel.

Each tray 4 is pivotally mounted on the splitter array back cover 8 by means of a leash 24 and a retaining ring 25 which are moulded integrally with the rest of the tray. The leash 24 of each tray 4 has two arms 24a and 24b joined together by a hinge 24c. Its retaining ring 25 is a friction fit within a groove 26 formed in the back cover 8 (see Figure 11). In use, a rod (not shown) passes through all the retaining rings 25 and through apertures (not shown) in the top and base plates 5a and 5b. In this way all the splice trays 4 are retained by their back plates 5c, but each can be pivoted out away from the other trays in the stack to provide access to its clip-on apertures 19a, 19b, 21a and 21b. In this position, the arms 24a and 24b take up a generally straightline configuration (as opposed to the V-shaped configuration they have when the tray is in the stack). As the retaining ring 25 of a pivoted-out tray 4 is held in position by the retaining rod, the pivotal movement of the tray is limited by the leash 24 as its two arms 24a and 24b straighten out. In the fully pivoted-out position (the first operating positioin), the fibre entry portion 10 of a tray 4 is exposed.

Each of the splitter array sub-assemblies S₁, S₂ and S₃ is associated with two fibres (four fibre end portions) of the eight fibres in the cut tube of the cable. The remaining two fibres (four fibre end portions) from the cut tube are stored in the break-out tray T as is described below with reference to Figure 13. As the cable C is in the form of a ring, telecommunications signals can travel to/from the exchange in either direction round the ring. For convenience, one of the directions is termed the main direction, and the other the standby direction. In practice, only main fibres will be used for normal signalling, the standby fibres only being used in the eventuality of main fibre failure.

The two main fibre end portions associated with say the splitter array sub-assembly S₁ pass from the break-out tray T to the lowest splice tray 4 of that assembly, the fibre end portions being supported in, and protected by, a bend limiting tube 27a (see Figure 6). This bend limiting tube 27a is a proprietary item made of polypropylene ringed tubing which, though flexible, cannot easily be bent beyond minimum bend radius requirements for live fibre. The bend limiting tube 27a terminates in the port 17a of the lowest splice tray 4, and its two fibre end portions are led into the main body portion 9 via the channels 18a and 18b, the clip-on apertures 19a and 19b, and the channel 11. These fibre end portions are then spliced to the ends of a pair of fibres which (as is described below) are associated with the mats 6 and 7. The two splices are then positioned in a splice holder which is then mounted in the region 15. The four fibres leading to the splices are then stored in the main body portion 9 of the tray 4 with two of the fibres (for example those from the break-out tray T) being led away from the splices in the channel 14, and the other two fibres being led away from the splices via the channel 13 and the reversing channel 16. A length of each of the fibres is stored in the main body portion 9 of the tray 4 by passing these fibres one or more times round the mandrel 12 and under the V-shaped tab 23a. The fibres' natural resilience will ensure that the loops of fibre expand outwardly into a configuration of varying diameter turns. The provision of stored fibre permits a minimum of ten re-splices of each of the splices to be carried out during the lifetime of the assembly.

The two fibres which are associated with the mats 6 and 7 leave the main body portion of the tray 4 via the channel 11. They are then led to the port 17c of the entry portion 10 via the clip-on windows 21a and 21b and the channels 20a and 20b. These fibres are then led to the mats 6 and 7 within a bend limiting tube 27c (see Figure 6). One of these main input fibres terminates on the input mat 6, where (as is described below with reference to Figure 10) it is joined by splitter means to eight output fibres. Similarly, the other of these main input fibres terminates on the output mat 7, where it is joined by splitter means to eight output fibres.

The two standby fibre end portions associated with this splitter array sub-assembly S₁ pass from the break out tray T to the second lowest splice tray 4 of that assembly. Here, these two fibre end portions are spliced to two fibres which are led back to the mats 6 and 7 and so are termed standby input fibres, and each of the standby input fibres is joined by splitter means to the same eight output fibres as the corresponding main input fibre. The fibre arrangement on this second lowest splice tray 4 is the same as that for the lowest splice tray. Similarly, fibres enter and leave this splice tray 4 in bend limiting tubes 27a and 27c.

The remaining eight splice trays 4 in the sub-assembly S₁ of Figures 5 and 6 are customer splice trays. As the fibre arrangement in each of these customer splice trays 4 is the same, this will be described in detail for only one of these trays. Thus, one of the output fibres from each of the mats 6 and 7 (that is to say a transmit fibre and a receive fibre) is led to the port 17c of a given customer splice tray 4 inside a bend limiting tube 27c. These two fibres are led into the main body portion 9 of the tray 4 via the channels 20a and 20b, the clip-on windows 21a and 21b, and the channel 11. In use, these fibres are spliced to two fibres of a four-fibre blown fibre unit associated with a given customer. Such a unit has four fibres in a single tube, the tube being fed between the customer and the node N by the well known fibre blowing technique (see EP 108590). The customer's blown fibre unit is led to the port 17a of the splice tray 4 within a bend limiting tube 27a. The blown fibre coatings are stripped away from the four fibres "downstream" of the port 17a.

Two of the fibres within the unit (the two fibres which are to be spliced to the transmit and receive fibres from the mats 6 and 7, and so are termed live fibres) are fed to the main body portion 9 of the splice tray 4 via the channels 18a and 18b, the clip-on apertures 19a and 19b, and the channel 11. The two other fibres (which are spare fibres not for immediate use) are fed to the main body portion 9 of the splice tray 4 via the channels 22 and 11. All four fibres then pass round the mandrel 12 within the channel 13, and then back to the mandrel after passing along the channels 14 and 16. The two spare (dark) customer fibres pass through the aperture 12a and are stored inside the mandrel 12. The two live fibres pass round the mandrel 12, and are then spliced to the transmit and receive fibres from the mats 6 and 7, the splices are stored in a splice holder, and the splice holder is positioned in the region 15. As with the two lowest splice trays 4, each of the spliced fibres has a length to be stored (enabling up to ten re-splices to be made during the lifetime of the assembly), these fibre lengths likewise being stored by looping them each one or more times round the mandrel 12 and under the V-shaped tab 23a.

In order to access the splices within a given splice tray 4, it is necessary to remove the rod holding the retaining rings 25 in position, prior to the pulling that tray out of the stack sufficiently far to gain access to the splices. In this position (the second operating position), the tray 4 is maintained in position by its bend limiting tubes.

The two spare customer fibres stored within the mandrel 12 of a given splice tray 4 can be used to replace the two live fibres of that customer in the event of these fibres failing. More importantly, however, they can be used to provide that customer with additional lines or service. (In this connection, it should be noted that each fibre pair can provide up to 32 lines using customer premises equipment (CPE) electronics such as an optical network unit (ONU) matched to an optical line terminal (OLT) at the exchange. Each pair of fibres can also provide a Megastream service.) In this case, the two spare fibres are removed from their storage position within the mandrel 12, and are led to the fibre entry portion 10 of the tray 4 via the channels 13 and 11. They then leave the tray 4, via the apertureless channel 22 and the port 17b, and enter a bend limiting tube 27b (see Figure 6). This tube 27b is routed via the back cover plate 8 to another splice tray 4 - usually a splice tray of another of the sub-assemblies S₂ or S₃ of the node N. The tube 27b terminates at the port 17a of this tray 4, and the two fibres are led into the main body portion 9 via the channels 18a and 18b, the apertures 19a and 19b, and the channel 11. Here they are spliced to two "exchange" fibres, and all spare lengths of fibre are stored in the same manner as that described above for the other splice trays. In this connection, the "exchange" fibres could be either a second pair of fibres from the break-out tray T (direct exchange fibres), or a pair of output fibres from the mats 6 and 7 (indirect exchange fibres).

The bend limiting tubes 27a, 27b and 27c of each of the splice trays 4 are provided with respective support manifolds M (see Figures 6 and 9). Each manifold M is a sliding friction fit on a flanged portion (not shown) of the chassis back plate 5c, and is provided with an open aperture 28a for supporting the associated bend limiting tube 27a, and with a pair of closed apertures 28b and 28c for supporting respectively the associated bend limiting tube 27b (if there is one) and the associated bend limiting tube 27c. The manifolds M are made of injection moulded filled nylon.

Figure 10 shows the input mat 6 of the sub-assembly S₁. The output mat 7 of this sub-assembly, being of identical construction to the input mat 6, will not be described in detail. The mat 6 includes an input slot 29 for receiving the main input fibre, and an input slot 30 for receiving the standby input fibre. These two slots 29 and 30 lead to an aperture 31 which houses a 2x2 fused coupler (not shown). The two output fibres from this fused coupler are led via a curved channel 32 around a mandrel 33. The mandrel 33 has a radius of 30mm, and so fulfils the minimum bend requirements for live fibre. Each of the fused coupler output fibres is spliced to an input fibre to a respective 1x4 planar coupler (splitter). The two splices are stored in a recess 35b.

The two planar couplers (not shown) are housed in an aperture 34 adjacent to the aperture 31. The two fibres pass from the mandrel 33 to their planar couplers via the curved end wall 35a of a recessed portion 35 of the mat 6, and via respective curved slot 36. The eight output fibres of the two planar couplers pass round the mandrel 33 via a slot 37. These fibres then leave the mat 6 via respective output slots 38 which fan out over the recessed portion 35 and the adjacent raised portion which defines the curved end wall 35a.

The mat 6 thus forms a 2x8 splitter for the transmit fibres, with one of its inputs being the main transmit input fibre and the other the standby transmit input fibre. As mentioned above, only main fibres are used in normal operation, so the mat 6 acts as a 1x8 splitter. However, should there be problems with the main fibre route, the mat 6 will still act as a 1x8 splitter with the standby receive fibre as its input fibre.

Similarly, the mat 7 constitutes a 2x8 splitter for the receive fibres.

Figure 11 shows the splitter array back cover 8 of the sub-assembly S₁ in greater detail. The back cover 8 is formed with a pair of longitudinally-extending grooves 8a adjacent to that end remote from the groove 26. These grooves 8a reduce the thickness of the back cover in this end region, and so enhance the flexibility of the back cover, thereby ensuring that, in use, the back cover holds the mats 6 and 7 firmly aqainst the chassis back plate 5c. In this connection, it should be noted that this end region of the back cover 8 is formed with an in-turned L - shaped flange 8b which can be snapped over grooves 28d formed in the manifolds M to hold the back cover to the chassis 5 with the mats 6 and 7 firmly sandwiched therebetween.

The outer surface of the back cover 8 is also provided with a plurality of longitudinally-extending ribs 8c, the base of each rib being formed with a plurality of apertures 8d. These apertures 8d extend right through the back cover 8 to its inside surface, and constitute a matrix of tie points for the attachment of cable ties which are used to tie the bend limiting tubes 27a, 27b and 27c to the sub-assembly S.

Figure 12 shows the break-out tray T in greater detail. As mentioned above, two loops of the cable are stored in the track 3, before the cable exits the break-out tray T via the entry portion 2, and one of the tubes of the cable is cut in the middle of its stored length. One of the cut fibres forms the main fibre for the splitter array sub-assembly shown in Figures 5 and 6, and another the standby fibre for that sub-assembly. The remaining fibres can be main and standby fibres for other splitter array sub-assemblies S₂ and S₃ of the node N, or can be stored around a mandrel 39 at that end of the tray T remote from the cable entry portion 2. The mandrel 39 has a rounded rectangular cross-section, and is sized so that fibre coiled therearound does not exceed minimum bend radius requirements.

The break-out region B of the tray T is formed with a plurality of curved upstanding fingers 40, adjacent pairs of which define sixteen fibre feed channels 41. The two fibre end portions that constitute the main fibres associated with the lowest splice tray 4 of the sub-assembly S₁, are fed through the first channel 41 (that is to say through the channel nearest the entry portion 2). Similarly, the two fibre end portions that constitute the standby fibres associated with the second lowest splice tray 4 are fed through the second channel 41. (As there are sixteen channels 41, the break-out tray T can handle sixteen pairs of fibre end portions, that is to say all the fibre end portions from two cut tubes. ) The two fibres then pass into the bend limiting tube 27a associated with the lowest splice tray 4 of the sub-assembly S₁. This tube 27a passes through an aperture 42 in a raised portion 43 of the break-out region B (see Figure 13), and is tied in place by ties (not shown) associated with a further aperture 44.

A preferred form of TPON includes a 32-way split, that is to say each fibre from the exchange serves 32 actual customers via one or more splitting (flexibility) points such as the node N described above. As the node N defines an 8-way split, it could be used as a primary splitting point, in which case each of the "customer" fibres leaving the node would lead to a respective secondary splitting point. Each of the secondary splitting points would be similar to the node N, but each incoming fibre would be split four ways rather than eight ways. As the outgoing fibres from a primary node do not go directly to customers, the terms "customer splice trays" and "customer fibres" used above should be taken to mean splice trays and fibres associated with either actual customers or with downstream splitting points. Of course, in the preferred 32-way split form of TPON, the nodes N could also be secondary nodes. In this case, there would be four nodes N, each serving eight actual customers, and the four secondary nodes would be served via a 4-way split primary node. Here again, the primary node, would be similar to the node N, but each incoming (exchange) fibre would be split four ways rather than eight ways.

It will be apparent that the type of splitter array sub-assembly described above is extremely flexible in that it can readily be adapted to suit different requirements. In particular, it is adaptable to any splitting ratio by varying the number of splice trays used and the size and form of the splitter array mats 6 and 7. Moreover, by co-locating several splitter array sub-assemblies in a node, splitting from a plurality of exchange fibres can be accomplished at any given point, using different splitting ratios in each sub-assembly if required.

An important advantage of the sub-assemblies described above, is that the splitters and the associated fibres can all be factory fitted. Thus, the fused and planar couplers and their associated fibres can be made and positioned in the mats 6 and 7, and the associated fibres can be led to their splice trays 4 within bend limiting tubes - all at the factory. When the sub-assembly is to commissioned, the fitter needs only to cut one or more tubes of the cable C, feed main and standby fibre end portions to the lowest two splice trays 4 of the sub-assembly, store spare cut fibre end portions in the break-out tray T, splice the main and standby fibre end portions to the main and standby input fibres already present in the two splice trays, and to splice "customer" fibres to the fibres already present in the other splice trays 4. In this way, the amount of skilled work which has to be carried out on site is reduced to a minimum. In particular, the fitter does not need to carry out any intricate splicing fcr splitting purposes. Moreover, the bend limiting tubes ensure that the fibres guided therein are never bent beyond the minimum bend requirements for live fibre even when the splice trays are pivoted out of the stack to either of their operating positions. This guarantees the transmission performance of live fibres carried by the bend limiting tubes.

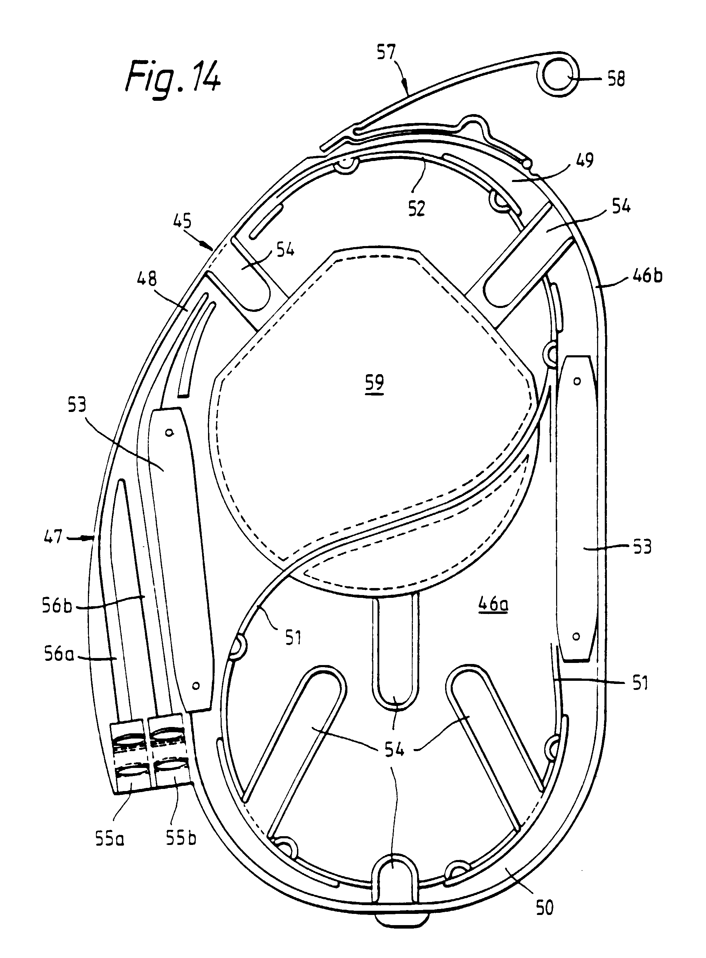

The sub-assembly described above could also be adapted for use in a spur joint. In such a case, no splitting is required, so the sub-assembly would not include the mats 6 and 7. In a first type of spur joint, all twelve tubes of the fibre cable C would be cut, thereby forming twelve main fibre tube ends and twelve standby fibre tube ends. The fibres of six of the main fibre tube ends would then be spliced to the fibres of six of the standby fibre tube ends in special (single element) splice trays 45 (as is described below with reference to Figure 14). The fibres of the remaining six main fibre tube ends are then spliced to "customer" fibres in 24 splice trays 4. Similarly, the fibres of the remaining six standby fibre tube ends are spliced to 48 "customer" fibres in 24 splice trays 4. Thus, two fibres are fed, in bend limiting tubes, from a breakout tray (not shown) to each of the 48 splice trays 4, where they are spliced to "customer" fibres in a similar manner to that described above with reference to Figures 5 and 6.

A respective main fibre tube end and a respective standby fibre tube end are fed from the break-out tray to each of the splice trays 45 (see Figure 14), each tube end being in a respective bend limiting tube (not shown, but similar to the bend limiting tubes 27a, 27b and 27c). Each tray 45 has a main body portion 46 and a tube entry portion 47. The main body portion 46 is of oval configuration, having an oval base 46a and an upstanding peripheral wall 46b. Fibre access to the main body portion 46 from the tube entry portion 47 is via a channel 48. Channels 49, 50, 51 and 52 are provided in the main body portion 46 to guide both main and standby fibres to a pair of splice holder regions 53. The channel 51 is a direction reversing channel, and permits main and standby fibres to approach each of the splice holder regions 53 from opposite directions.

Each splice tray 45 is also provided with a number of fibre retention tabs 54 for holding fibre in the various channels 49 to 52.

The tube entry portion 47 of each splice tray 45 includes two tube entry/exit ports 55a and 55b. Channels 56a and 56b are provided to lead fibre between the ports 55a and 55b and the channel 48.

The splice tray is provided with a leash 57 and a retaining ring 58 (similar to the leash 24 and the retaining ring 25 of the tray 4). The leash 57 permits the tray 45 to be pivoted out of a stack of trays to enable access to the tube entry portion 47.

In use, a main fibre tube end is led to the port 55a of each of the splice trays 45, and a standby fibre tube end is led to the port 55b of each of the splice trays 45. Inside each tube entry portion 47, the tubes are cut away to expose the fibres. The fibres are then fed into the main body portions 46 of the trays, where they are spliced. The eight splices in each tray 45 are then positioned, four in each of a pair of splice holders, and the splice holders are then mounted in the regions 53. The fibres leading to the splices are then stored in the main body portions 46 of the trays 45. A length of each of the fibres is stored in the main body portion 46 of the associated tray 45 by passing these fibres one or more times round an upstanding mandrel 59 and under the tabs 54. The fibres' natural resilience will ensure that the loops of fibre expand outwardly to a configuration of varying diameter turns. The provision of stored fibre permits re-splicing to be carried out during the lifetime of the assembly.

In a modified version of the spur joint described above, only six of the tubes are cut, the fibres in these tubes being spliced to "customer" fibres in 48 splice trays 4 as described above. The remaining six uncut tubes are looped around a break-out tray. Alternatively, instead of using 48 splice trays 4, six splice trays 45 could be used. This alternative would, however, only be used in cases where there is no need to access spur joints for future use.

Obviously, for either type of spur joint, the number of fibres forming the spur can be varied. For example, the spur could be formed from the fibres of one cut tube. In this case the spur would contain 16 fibres (eight main fibres and eight standby fibres from a single cut tube) and 88 fibres (from the remaining eleven tubes - either cut and spliced or uncut and coiled) would continue through on the ring.

## Claims

1. A splice tray (4) for housing at least one optical fibre splice and for storing optical fibres leading to the or each splice, the splice tray comprising a main body portion (9) and a fibre entry/exit portion (10), the main body portion having a splice holder region (15), means defining at least one track (11, 13, 14) leading from the fibre entry/exit portion to the splice holder region and a live fibre storage region (9a),
the track(s) (11, 13, 14) leading from the fibre entry/exit portion are arranged to guide fibres to/from the splice holder region and to protect the guided fibres from being bent beyond the minimum bend radius requirements for live fibres;
the live fibre storage region (9a) is configured so that live fibre can be stored in said region by confining loops of fibre under their own natural resilience with the loops of fibre having radii of curvature that are not less than the minimum bend radius curvature for live fibre characterised in that
the fibre entry/exit portion of the splice tray has one or more fibre test apertures (19a, 19b, 21a, 21b) which are in the base of the tray and which are each arranged to contain, in use, a respective live optical fibre, whereby each fibre test aperture exposes a length of optical fibre within the fibre test aperture such that each exposed length of fibre can be accessed from both sides of the splice tray, and so that each live optical fibre leading to or from a splice can be independently tested by an appropriate light measurement apparatus applied to the fibre from both sides of the splice tray, guide means (18a, 18b, 20a, 20b) being provided on opposite sides of each test aperture (19a, 19b, 21a, 21b) to determine the path of the respective fibre across the aperture so as to facilitate testing of the fibre.

2. A splice tray as claimed in claim 1, wherein the main body portion (9) comprises an additional storage region (12a) to store dark fibre, the additional storage region (12a) being distinct from that (9a) provided to store live fibre.

3. A splice tray as claimed in claim 2, wherein the dark fibre storage region (12a) is the interior of a mandrel (12), the dimensions of the interior of the mandrel being such that dark fibre can be stored in a looped fashion therein at not less than the minimum bend radius curvature for live fibre.

4. A splice tray as claimed in any one of claims 1 to 3, wherein the fibre entry/exit portion (10) is provided with two fibre entry/exit ports (17a, 17c) and first (18a, 20a) and second (18b, 20b) guide channels are provided to guide respective fibres to the main body portion (9) from the ports (17a, 17c).

5. A splice tray as claimed in claim 4, wherein the fibre entry/exit portion is provided with a third fibre entry/exit port (17b) and a third fibre guide channel (22) is provided to guide a respective fibre to the main body portion from the third port (17b).

6. A splice tray as claimed in any one of claims 1 to 5, wherein the track(s) (11, 13, 14) are recessed into the main body portion (9).

7. A splice tray as claimed in any one of claims 1 to 6, wherein the main body portion is provided with fibre retention tabs (23) overlying the live fibre storage region (9a).

8. A splice tray as claimed in any one of claims 1 to 7, wherein the splice tray is provided with a hinged mounting arm (24) one end of which is fixed to the main body portion (9) of the tray, and the other end of which carries a retaining ring (25) the hinge being disposed between the two ends.

9. A splice tray as claimed in claim 8, wherein the mounting arm of the splice tray is such that the two parts of the arm on opposite sides of the hinge lie in close proximity to one another in a folded-back position against the main body portion of the tray when the tray is in a first position relative to the retaining ring, said two arm portions being in a generally straight line configuration when the tray is in a second position relative to the retaining ring.

## Patentansprüche

1. Spleißfach (4) zur Unterbringung wenigstens eines Lichtleitfaserspleißes und zur Lagerung von zu dem oder jedem Spleiß führenden Lichtleitfasern, wobei das Spleißfach einen Hauptkörperabschnitt (9) und einen Fasereintritts-/Faseraustrittsabschnitt (10) enthält, wobei der Hauptkörperabschnitt einen Spleißhaltebereich (15), eine Einrichtung, die wenigstens eine vom Fasereintritts/Faseraustrittsabschnitt zum Spleißhaltebereich führende Bahn (11, 13, 14) definiert, sowie einen Aktivfaser-Lagerungsbereich (9a) besitzt, wobei
die Bahn(en) (11, 13, 14), die vom Fasereintritts-/Faseraustrittsabschnitt ausgeht (ausgehen) so beschaffen ist (sind), daß sie Fasern zum/vom Faserhaltebereich führt (führen) und die geführten Fasern vor einer Biegung schützt (schützen), die die Forderungen für den minimalen Biegeradius für Aktivfasern übersteigt; und
der Aktivfaser-Lagerungsbereich (9a) so beschaffen ist, daß die Aktivfaser in dem Bereich gelagert werden kann, in dem Faserschleifen aufgrund ihrer eigenen natürlichen Elastizität mit Faserschleifen eingespannt werden, deren Krümmungsradien nicht kleiner als die minimale Biegeradiuskrümmung für Aktivfasern ist,
dadurch gekennzeichnet, daß
der Fasereintritts-/Faseraustrittsabschnitt des Spleißfachs eine oder mehrere Faserprüföffnungen (19a, 19b, 21a, 21b) besitzt, die sich in der Grundfläche des Fachs befinden und jeweils so beschaffen sind, daß sie im Gebrauch eine entsprechende Aktivlichtleitfaser enthalten, wobei jede Faserprüföffnung eine Lichtleitfaser innerhalb der Faserprüföffnung auf einer Länge freilegt, derart, daß jede Faser auf der freigelegten Länge von beiden Seiten des Spleißfachs zugänglich ist, und derart, daß jede Aktivlichtleitfaser, die zu oder von einem Spleiß hin- bzw. wegführt, durch eine geeignete Lichtmeßvorrichtung, die an der Faser auf beiden Seiten des Spleißfachs angebracht wird, unabhängig geprüft werden kann, wobei auf gegenüberliegenden Seiten jeder Prüföffnung (19a, 19b, 21a, 21b) Führungseinrichtungen (18a, 18b, 20a, 20b) vorgesehen sind, die den Weg der entsprechenden Faser durch die Öffnung festlegt, um so die Prüfung der Faser zu erleichtern.

2. Spleißfach nach Anspruch 1, bei dem der Hauptkörperabschnitt (9) einen weiteren Lagerungsbereich (12a) zum Lagern einer Dunkelfaser enthält, wobei der weitere Lagerungsbereich (12a) von demjenigen (9a), der für die Lagerung der Aktivfaser vorgesehen ist, verschieden ist.

3. Spleißfach nach Anspruch 2, bei dem sich der Dunkelfaser-Lagerungsbereich (12a) in einem Dorn (12) befindet, dessen Innenabmessungen derart sind, daß die Dunkelfaser schleifenartig mit einer Krümmung gelagert werden kann, die nicht kleiner als die minimale Biegeradiuskrümmung für die Aktivfaser ist.

4. Spleißfach nach irgendeinem der Ansprüche 1 bis 3, bei dem der Fasereintritts-/Faseraustrittsabschnitt (10) mit zwei Fasereintritts-/Faseraustrittsanschlüssen (17a, 17c) versehen ist, wobei erste (18a, 20a) und zweite (18b, 20b) Führungskanäle vorgesehen sind, die jeweilige Fasern von den Anschlüssen (17a, 17c) zum Hauptkörperabschnitt (9) führen.

5. Spleißfach nach Anspruch 4, bei dem der Fasereintritts-/Faseraustrittsabschnitt mit einem dritten Fasereintritts-/Faseraustrittsanschluß (17b) versehen ist, wobei ein dritter Faserführungskanal (22) vorgesehen ist, der eine entsprechende Faser vom dritten Anschluß (17b) zum Hauptkörperabschnitt führt.

6. Spleißfach nach irgendeinem der Ansprüche 1 bis 5, bei dem die Bahn(en) (11, 13, 14) im Hauptkörperabschnitt (9) ausgespart ist (sind).

7. Spleißfach nach irgendeinem der Ansprüche 1 bis 6, bei dem der Hauptkörperabschnitt mit Faserhalteansätzen (23) versehen ist, die über dem Aktivfaser-Lagerungsbereich (9a) liegen.

8. Spleißfach nach irgendeinem der Ansprüche 1 bis 7, das mit einem Gelenk-Anbringungsarm (24) versehen ist, wovon ein Ende am Hauptkörperabschnitt (9) des Fachs befestigt ist und das andere Ende einen Haltering (25) trägt, wobei sich das Gelenk zwischen den beiden Enden befindet.

9. Spleißfach nach Anspruch 8, bei dem der Anbringungsarm so beschaffen ist, daß die beiden Teile des Arms auf gegenüberliegenden Seiten des Gelenks in einer eingeklappten Position gegenüber dem Hauptkörperabschnitt des Fachs nebeneinanderliegen, wenn sich das Fach relativ zum Haltering in einer ersten Position befindet, während sich die beiden Armabschnitte eine im allgemeinen geradlinige Konfiguration besitzen, wenn sich das Fach relativ zum Haltering in einer zweiten Position befindet.

## Revendications

1. Plateau à épissures (4) destiné à loger au moins une épissure de fibres optiques et à emmagasiner des fibres optiques conduisant à la ou à chaque épissure, le plateau à épissures comprenant une partie de corps principal (9) ainsi qu'une partie d'entrée/sortie de fibres (10), la partie de corps principal comportant une région de support d'épissures (15), un moyen définissant au moins une piste (11, 13, 14) conduisant depuis la partie d'entrée/de sortie de fibres jusqu'à la région de support d'épissures ainsi qu'une région de stockage de fibres actives (9a),
la piste ou les pistes (11, 13, 14) conduisant à partir de la partie d'entrée/sortie de fibres sont agencées afin de guider des fibres vers/depuis la région de support d'épissures et à protéger les fibres guidées vis-à-vis d'une courbure au-delà des exigences de rayon de courbure minimum pour des fibres actives,
la région de stockage de fibres actives (9a) est configurée de façon que des fibres actives puissent être emmagasinées dans ladite région en confinant des boucles de fibres sous leur élasticité naturelle propre, les boucles de fibres présentant des rayons de courbure qui ne sont pas inférieurs à la courbure présentant un rayon de courbure minimum pour une fibre active, caractérisé en ce que
la partie d'entrée/sortie de fibres du plateau à épissures comporte une ou plusieurs ouvertures de test de fibre (19a, 19b, 21a, 21b) qui se trouvent dans la base du plateau et qui sont agencées chacune de façon à contenir, en utilisation, une fibre optique active respective, grâce à quoi chaque ouverture de test de fibre expose une certaine longueur de fibre optique à l'intérieur de l'ouverture de test de fibre, de sorte que l'on peut accéder à chaque longueur de fibre exposée depuis les deux côtés du plateau à épissures, et de sorte que chaque fibre optique active conduisant à une épissure ou provenant de celle-ci peut être testée indépendamment grâce à un dispositif de mesure de lumière approprié appliqué à la fibre depuis les deux côtés du plateau à épissures, un moyen de guidage (18a, 18b, 20a, 20b) étant disposé sur des côtés opposés de chaque ouverture de test (19a, 19b, 21a, 21b) afin de déterminer le trajet de la fibre respective à travers l'ouverture de manière à faciliter le test de la fibre.

2. Plateau à épissures selon la revendication 1, dans lequel la partie de corps principal (9) comprend une région de stockage supplémentaire (12a) destinée à emmagasiner des fibres inactives, la région de stockage supplémentaire (12a) étant distincte de celle (9a) prévue afin d'emmagasiner des fibres actives.

3. Plateau à épissures selon la revendication 2, dans lequel la région de stockage de fibres inactives (12a) est l'intérieur d'un mandrin (12), les dimensions de l'intérieur du mandrin étant telles que des fibres inactives peuvent être emmagasinées en disposition en boucle dans celui-ci en ne formant pas moins que la courbure de rayon de courbure minimum pour des fibres actives.

4. Plateau à épissures selon l'une quelconque des revendications 1 à 3, dans lequel la partie d'entrée/sortie de fibres (10) est munie de deux orifices d'entrée/sortie de fibres (17a, 17c) et des premiers (18a, 20a) et seconds (18b, 20b) canaux de guidage sont prévus afin de guider des fibres respectives vers la partie de corps principal (9) à partir des orifices (17a, 17c).

5. Plateau à épissures selon la revendication 4, dans lequel la partie d'entrée/sortie de fibres est munie d'un troisième orifice d'entrée/sortie de fibres (17b) et un troisième canal de guidage de fibre (22) est prévu afin de guider une fibre respective vers la partie de corps principal à partir du troisième orifice (17b).

6. Plateau à épissures selon l'une quelconque des revendications 1 à 5, dans lequel la piste ou les pistes (11, 13, 14) sont noyées dans la partie de corps principal (9).

7. Plateau à épissures selon l'une quelconque des revendications 1 à 6, dans lequel la partie de corps principal est munie de languettes de maintien de fibres (23) recouvrant la région de stockage de fibres actives (9a).

8. Plateau à épissures selon l'une quelconque des revendications 1 à 7, dans lequel le plateau à épissures est muni d'un bras de montage articulé (24) dont une première extrémité est fixée à la partie de corps principal (9) du plateau, et dont l'autre extrémité porte une bague de maintien (25), l'articulation étant disposée entre les deux extrémités.

9. Plateau à épissures selon la revendication 8, dans lequel le bras de montage du plateau à épissures est tel que les deux parties du bras sur les côtés opposés de l'articulation s'étendent à proximité immédiate l'une de l'autre dans une position de repli contre la partie de corps principal du plateau lorsque le plateau se trouve dans une première position relativement à la bague de maintien, lesdites deux parties de bras suivant une configuration générale en ligne droite lorsque le plateau se trouve dans une seconde position relativement à la bague de maintien.
